# EUROPEAN PATENT SPECIFICATION

(11) **EP 4 135 366 B1**
(45) Date of publication and mention of the grant of the patent: **04.11.2026**
(21) Application number: 20930433.6
(22) Date of filing: 09.04.2020
(51) Int. Cl.: H04W 76/28, H04W 76/40, H04W 4/90, H04W 8/18, H04W 52/02, H04W 4/08, H04W 4/46

(54) **WIRELESS COMMUNICATION DEVICE, WIRELESS COMMUNICATION SYSTEM, AND POWER CONTROL METHOD**
DRAHTLOSKOMMUNIKATIONSVORRICHTUNG, DRAHTLOSKOMMUNIKATIONSSYSTEM UND STROMSTEUERUNGSVERFAHREN
DISPOSITIF DE COMMUNICATION SANS FIL, SYSTÈME DE COMMUNICATION SANS FIL ET PROCÉDÉ DE COMMANDE D'ÉNERGIE

(43) Date of publication of application: 15.02.2023
(73) Proprietor: 1FINITY Inc., Kawasaki-shi, Kanagawa 211-8588 (JP)
(72) Inventor: WU, Jianming, Kawasaki-shi, Kanagawa 211-8588 (JP)
(74) Representative: Haseltine Lake Kempner LLP
(86) International application number: PCT/JP2020/016046
(87) International publication number: WO 2021/205627

(56) References cited:
- EP-A1- 3 412 109
- EP-B1- 3 412 109
- JP-A- 2008 517 515
- JP-A- 2017 139 659
- US-A1- 2010 208 660
- US-A1- 2018 234 919
- ZTE: "Discussion on PC5 DRX", vol. RAN WG2, no. Hangzhou, China; 20170515 - 20170519, 14 May 2017 (2017-05-14), XP051275179, Retrieved from the Internet <URL:http://www.3gpp.org/ftp/Meetings_3GPP_SYNC/RAN2/Docs/> [retrieved on 20170514]
- LG ELECTRONICS: "New WID on NR sidelink enhancement", vol. TSG RAN, no. Sitges, Spain; 20191209 - 20191212, 12 December 2019 (2019-12-12), XP051839820, Retrieved from the Internet <URL:https://ftp.3gpp.org/Meetings_3GPP_SYNC/RAN/Docs/RP-193134.zip RP-193134 WID_sidelink_enhancement v3.doc> [retrieved on 20191212]
- OPPO: "Physical layer procedure for NR-V2X sidelink", 3GPP TSG RAN WG1 #98BIS RL-1910375, 8 October 2019 (2019-10-08), pages 1 - 12, XP051789180

## Description

### [Technical Field]

The present invention relates to a wireless communication device, a wireless communication system, and a power control method.

### [Background Art]

In current networks, mobile terminal (smartphone and featurephone) traffic accounts for the majority of network resources. Furthermore, traffic used by mobile terminals is likely to keep increasing toward the future.

On the other hand, with the expansion of Internet of Things (IoT) services (for example, a transportation system, a smart meter, and a surveillance system of a device or the like), there is a demand to support services having various requirements. Thus, for the communication standards of the fifth generation mobile communication system (5G or New Radio (NR)), techniques have been demanded that achieve higher data rates, greater capacity, and lower latency, in addition to the standard techniques of the fourth generation mobile communication system (4G) (for example, Non Patent Literatures 2 to 12).

Note that, about the fifth generation communication standards, working groups (such as TSG-RAN WG1 and TSG-RAN WG2) of the Third Generation Partnership Project (3GPP) have been studying the techniques, and the first edition of the standard specification was issued in December 2017 (Non Patent Literatures 13 to 39).

As described above, to support the diverse services, 5G is supposed to support many use cases classified into Enhanced Mobile Broad Band (eMBB), Massive Machine Type Communications (MTC), and Ultra-Reliable and Low Latency Communication (URLLC).

Furthermore, New Radio Vehicle to Everything (NR-V2X) communication is also discussed in a 3GPP working group. NR-V2X is a generic term for Vehicle to Vehicle (V2V) performing communication between vehicles, Vehicle to Pedestrian (V2P) performing communication between vehicles and pedestrians, Vehicle to Infrastructure (V2I) performing communication between vehicles and road infrastructures, such as signs, Vehicle to Network (V2N) performing communication between vehicles and networks, and the like that use, for example, sidelink channels. The provisions on V2X are described in, for example, Non Patent Literature 1.

Regarding resource allocation in NR-V2X, there is an allocation method subjecting control channels (PSCCH: Physical Sidelink Control CHannel) and data channels (PSSCH: Physical Sidelink Shared CHannle) to time division multiplexing (TDM) or frequency division multiplexing (FDM). Note that resources for PSCCHs are mapped with, for example, sidelink control information (SCI) including information on the modulation scheme and encoding rate of data of the respective PSSCHs and the like. Furthermore, to enhance the channel quality of sidelink, feedback channels (PSFCH: Physical Sidelink Feedback CHannel) are introduced.

### [Citation List]

### [Non Patent Literature]

Non Patent Literature 1: 3GPP TS 22.186 V16.2.0 (2019-06)
Non Patent Literature 2: 3GPP TS 36.211 V16.0.0 (2019-12)
Non Patent Literature 3: 3GPP TS 36.212 V16.0.0 (2019-12)
Non Patent Literature 4: 3GPP TS 36.213 V16.0.0 (2019-12)
Non Patent Literature 5: 3GPP TS 36.300 V16.0.0 (2019-12)
Non Patent Literature 6: 3GPP TS 36.321 V15.8.0 (2019-12)
Non Patent Literature 7: 3GPP TS 36.322 V15.3.0 (2019-09)
Non Patent Literature 8: 3GPP TS 36.323 V15.5.0 (2019-12)
Non Patent Literature 9: 3GPP TS 36.331 V15.8.0 (2019-12)
Non Patent Literature 10: 3GPP TS 36.413 V16.0.0 (2019-12)
Non Patent Literature 11: 3GPP TS 36.423 V16.0.0 (2019-12)
Non Patent Literature 12: 3GPP TS 36.425 V15.0.0 (2018-06)
Non Patent Literature 13: 3GPP TS 37.340 V16.0.0 (2019-12)
Non Patent Literature 14: 3GPP TS 38.201 V16.0.0 (2019-12)
Non Patent Literature 15: 3GPP TS 38.202 V16.0.0 (2019-12)
Non Patent Literature 16: 3GPP TS 38.211 V16.0.0 (2019-12)
Non Patent Literature 17: 3GPP TS 38.212 V16.0.0 (2019-12)
Non Patent Literature 18: 3GPP TS 38.213 V16.0.0 (2019-12)
Non Patent Literature 19: 3GPP TS 38.214 V16.0.0 (2019-12)
Non Patent Literature 20: 3GPP TS 38.215 V16.0.1 (2020-01)
Non Patent Literature 21: 3GPP TS 38.300 V16.0.0 (2019-12)
Non Patent Literature 22: 3GPP TS 38.321 V15.8.0 (2019-12)
Non Patent Literature 23: 3GPP TS 38.322 V15.5.0 (2019-03)
Non Patent Literature 24: 3GPP TS 38.323 V15.6.0 (2019-06)
Non Patent Literature 25: 3GPP TS 38.331 V15.8.0 (2019-12)
Non Patent Literature 26: 3GPP TS 38.401 V16.0.0 (2019-12)
Non Patent Literature 27: 3GPP TS 38.410 V16.0.0 (2019-12)
Non Patent Literature 28: 3GPP TS 38.413 V16.0.0 (2019-12)
Non Patent Literature 29: 3GPP TS 38.420 V15.2.0 (2018-12)
Non Patent Literature 30: 3GPP TS 38.423 V16.0.0 (2019-12)
Non Patent Literature 31: 3GPP TS 38.470 V16.0.0 (2019-12)
Non Patent Literature 32: 3GPP TS 38.473 V16.0.0 (2019-12)
Non Patent Literature 33: 3GPP TR 38.801 V14.0.0 (2017-03)
Non Patent Literature 34: 3GPP TR 38.802 V14.2.0 (2017-09)
Non Patent Literature 35: 3GPP TR 38.803 V14.2.0 (2017-09)
Non Patent Literature 36: 3GPP TR 38.804 V14.0.0 (2017-03)
Non Patent Literature 37: 3GPP TR 38.900 V15.0.0
Non Patent Literature 37: 3GPP TR 38.900 V15.0.0 (2018-06)
Non Patent Literature 38: 3GPP TR 38.912 V15.0.0 (2018-06)
Non Patent Literature 39: 3GPP TR 38.913 V15.0.0 (2018-06)
Non Patent Literature 40: 3GPP RP-193134 (2019-12), which relates to NR sidelink enhancement.

### [Patent Literature]

United States Patent Application Publication US 2010/0208660 A1 relates to a method for improving performance of a discontinuous reception (DRX) mode is provided, which includes assigning a plurality of DRX Start Offsets to a plurality of mobile stations served by a base station.

United States Patent Application Publication US 2018/0234919 A1 relates to a wireless telecommunications system including first and second groups of terminal devices operable to communicate with a base station via respective first and second network nodes. Each of the first and second groups of terminal devices are synchronized to communicate with the first and second network nodes, respectively, in a discontinuous mode including a repeating signaling cycle including first and second wake periods. The first wake period is a first portion of the repeating signaling cycle and the start of the first wake period is defined by a first offset value relative to the start of the repeating signaling cycle. The second wake period is a second portion of the repeating signaling cycle and the start of the second wake period is defined by a second offset value relative to the start of the repeating signaling cycle, being different from the first offset value.

### [Summary of Invention]

### [Technical Problem]

Now, to reduce power consumption of a wireless communication device, the wireless communication device typically performs discontinuous reception (DRX) discontinuously executing reception processing, in some cases. When performing DRX, the wireless communication device turns on a wireless communication unit to execute the reception processing only during an active interval in a predetermined DRX cycle. Also in NR-V2X, power consumption can be reduced by performing DRX at each terminal device.

Unfortunately, the majority of traffic in NR-V2X is groupcast traffic, and there is a problem in that performing DRX at each terminal device belonging to the same group lowers communication performance.

In specific, in NR-V2X, groupcast in which a terminal device transmits a signal to the other terminal devices belonging to the same group is considered to be executed frequently. At this time, if each terminal device in the group independently sets an active interval and executes reception processing only during the active interval, the number of the terminal devices that can receive the signal decreases depending on the groupcast timing of the signal.

Alternatively, the terminal devices belonging to the same group may have synchronized active intervals and simultaneously execute reception processing; however, in this case, the terminal devices also execute sensing checking the availability of wireless resources at the same timing. Thus, when wireless resources for transmission are selected depending on sensing results, there is a high possibility that a conflict of wireless resources selected by the terminal devices occurs.

In this way, when groupcast is performed, it is not easy to reduce power consumption of the wireless communication devices through discontinuous reception without a decrease in communication performance.

In light of the foregoing, an object of the disclosed technique is to provide a wireless communication device, a wireless communication system, and a power control method that can restrain a decrease in communication performance while reducing power consumption.

### [Solution to Problem]

The invention is defined in the independent claims 1 and 8, to which reference should now be made.

Specific embodiments are defined in the dependent claims.

### [Advantageous Effects of Invention]

According to one aspect of the wireless communication device, the wireless communication system, and the power control method disclosed in this application, an effect that can restrain a decrease in communication performance while reducing power consumption is achieved.

### [Brief Description of Drawings]

FIG. 1 is a diagram illustrating groupcast of an example type.
FIG. 2 is a diagram illustrating groupcast of another example type.
FIG. 3 is a block diagram illustrating a configuration of a transmission device according to one embodiment.
FIG. 4 is a diagram for describing a selection of a transmission slot.
FIG. 5 is a block diagram illustrating a configuration of a reception device according to the one embodiment.
FIG. 6 is a flowchart illustrating a power control method.
FIG. 7 is a diagram illustrating a specific example of a relationship between zones and an active interval.
FIG. 8 is a diagram illustrating a specific example of active intervals in accordance with a communication range.
FIG. 9 is a diagram illustrating a specific example of active intervals in accordance with a group ID.
FIG. 10 is a diagram illustrating a specific example of active intervals according to another embodiment.
FIG. 11 is a diagram illustrating a specific example of active intervals according to yet another embodiment.

### [Embodiments for Carrying Out the Invention]

One embodiment of a wireless communication device, a wireless communication system, and a power control method disclosed in this application will be described in detail below with reference to the drawings. Note that this embodiment is not construed to limit the present invention.

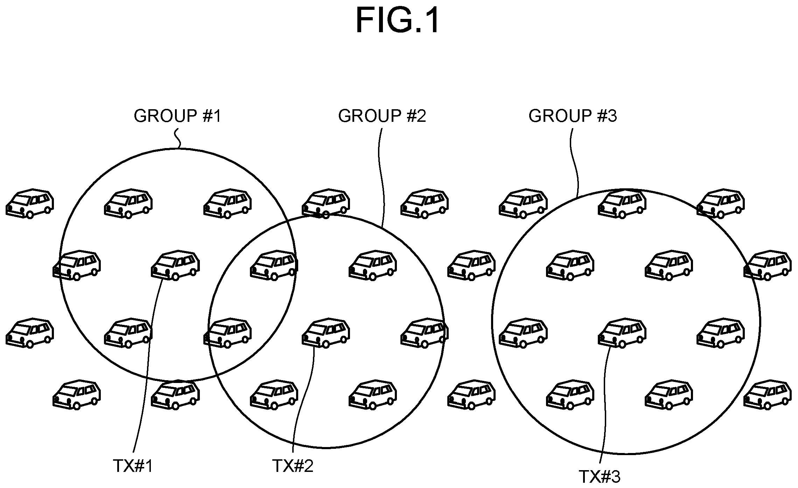

FIG. 1 is a diagram illustrating example groupcast according to the one embodiment. As illustrated in FIG. 1, a wireless communication system according to the one embodiment includes a plurality of terminal devices each mounted in a vehicle, for example. The terminal devices can wirelessly communicate with each other and may execute groupcast in which signals are transmitted to the other terminal devices belonging to the same group.

In the example illustrated in FIG. 1, a group is composed of terminal devices in a predetermined communication range centered on a terminal device transmitting a signal. That is, for example, terminal devices in a predetermined communication range centered on a terminal device TX#1 transmitting a signal belong to a group #1, terminal devices in a predetermined communication range centered on a terminal device TX#2 transmitting a signal belong to a group #2, and terminal devices in a predetermined communication range centered on a terminal device TX#3 transmitting a signal belong to a group #3. The size of the communication range of each of the groups #1 to #3 is preliminarily determined in accordance with, for example, the type of communication service and the like.

Each terminal device identifies the positions of the own device and the terminal device transmitting a signal by zones set in accordance with geographical coordinates. That is, for example, grid-like zones are set in an area where the wireless communication system is deployed, and each terminal device can determine whether the own device belongs to a group from the distance between the zone where the terminal device transmitting a signal is located and the coordinates where the own device is located. In specific, for example, when the terminal device TX#1 transmits a signal including identification information of the zone (hereinafter referred to as a "zone ID") where the terminal device TX#1 is located, each terminal device calculates a distance between the own device and the terminal device TX#1 from the coordinates where the own device is located and the zone ID included in the signal transmitted from the terminal device TX#1. Then, each terminal device judges whether the calculated distance is included in the communication range to determine whether the own device belongs to the group #1.

In this way, in the wireless communication system, groupcast of such a type that signals are transmitted and received in a group set in accordance with the communication range may be executed.

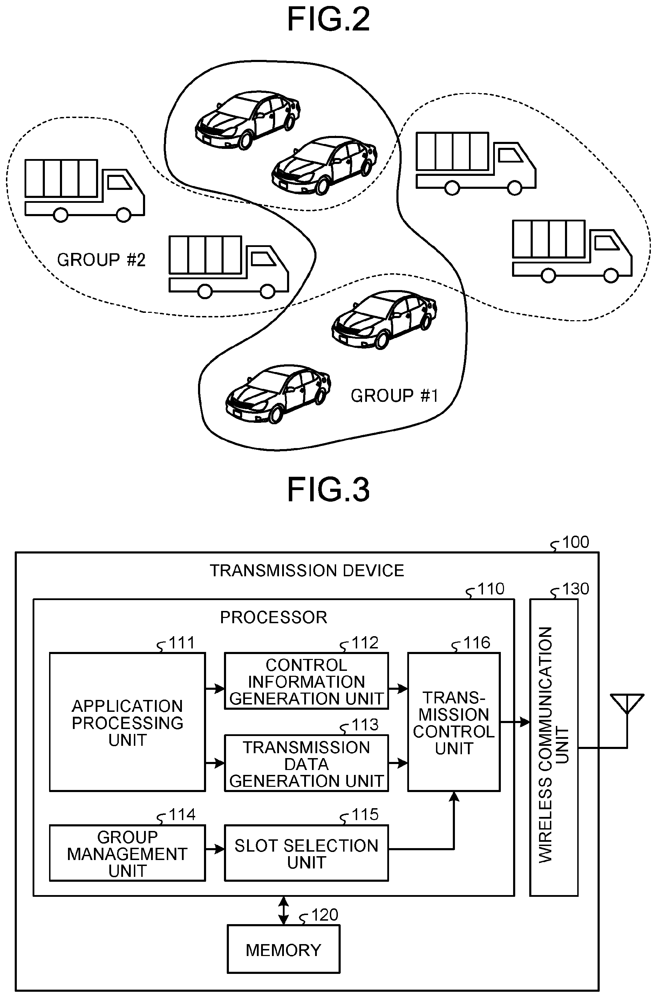

FIG. 2 is a diagram illustrating another example groupcast according to the one embodiment. Similar to FIG. 1, in FIG. 2, the wireless communication system according to the one embodiment includes a plurality of terminal devices each mounted in a vehicle, for example. The terminal devices can wirelessly communicate with each other and may execute groupcast in which signals are transmitted to the other terminal devices belonging to the same group.

In the example illustrated in FIG. 2, a group is composed of terminal devices preliminarily registered as members. That is, for example, a plurality of terminal devices enclosed by the solid line in the drawing belong to a group #1, and a plurality of terminal devices enclosed by the broken line in the drawing belong to a group #2. These groups are independent of the positions of the terminal devices, and even terminal devices located remote from each other belong to the same group as long as the terminal devices are preliminarily registered. Furthermore, each terminal device may simultaneously belong to a plurality of groups and holds identification information of the groups (hereinafter referred to as a "group ID") to which the own device belongs. Note that the group ID is identification information indicating a destination group for groupcast and is thus also referred to as a destination ID.

In this way, in the wireless communication system, groupcast of such a type that signals are transmitted and received in a group set in accordance with the group ID may be executed.

The terminal device performing groupcast executes discontinuous reception (DRX) in accordance with the type of groupcast. That is, the terminal device determines an active interval indicating time for supplying power to a wireless communication unit in accordance with information on groupcast setting and executes signal transmission and reception only during the active interval. The terminal device then stops power supply to the wireless communication unit to save power during time other than the active interval in a predetermined DRX cycle.

FIG. 3 is a block diagram illustrating a configuration of a transmission device 100 according to the one embodiment. The transmission device 100 illustrated in FIG. 3 is one of terminal devices groupcasting signals, and FIG. 3 illustrates only a processing section relating to signal transmission. Furthermore, the function of each processing section when groupcast is executed in accordance with the communication range will be mainly described below.

The transmission device 100 illustrated in FIG. 3 includes a processor 110, a memory 120, and a wireless communication unit 130.

The processor 110 includes, for example, a central processing unit (CPU), a field programmable gate array (FPGA), a digital signal processor (DSP), or the like, and controls the entire transmission device 100 in a centralized manner. In specific, the processor 110 includes an application processing unit 111, a control information generation unit 112, a transmission data generation unit 113, a group management unit 114, a slot selection unit 115, and a transmission control unit 116.

The application processing unit 111 executes the processing of an application supporting various communication services.

The control information generation unit 112 generates control information, such as sidelink control information (SCI). The control information generated by the control information generation unit 112 includes the zone ID of the zone where the transmission device 100 is located. The control information may further include information on the encoding rate and modulation scheme of data, information identifying a wireless resource for a data channel used for data transmission, information identifying a wireless resource used for data retransmission, and the like.

The transmission data generation unit 113 generates transmission data to be groupcast to the terminal devices in the group in accordance with the processing at the application processing unit 111. The transmission data generated by the transmission data generation unit 113 is groupcast to the terminal devices in the group set in accordance with the communication range, for example.

The group management unit 114 manages the group to which the transmission device 100 belongs. In specific, the group management unit 114 uses, for example, the Global Positioning System (GPS) or the like to acquire position information of the transmission device 100 and identifies the zone ID of the zone where the transmission device 100 is located. The group management unit 114 then identifies zones included in the communication range centered on the zone where the transmission device 100 is located. The group management unit 114 determines that the zones included in the communication range are zones corresponding to the group and holds the zone IDs of these zones.

Note that, if groupcast is executed in accordance with the group ID, the group management unit 114 holds the group ID of the group to which the transmission device 100 belongs and holds identification information of the other terminal devices belonging to this group.

The slot selection unit 115 selects a slot to transmit data in accordance with information on the group managed by the group management unit 114. In specific, the slot selection unit 115 selects a slot included in the active intervals of the terminal devices belonging to the group being the data destination. That is, the active interval of each terminal device is composed of slots corresponding to the zone where the terminal device is located, and the active interval differs depending on the zone where the terminal device is located. Thus, the slot selection unit 115 selects a slot at which all the terminal devices belonging to the group being the data destination are commonly in active intervals.

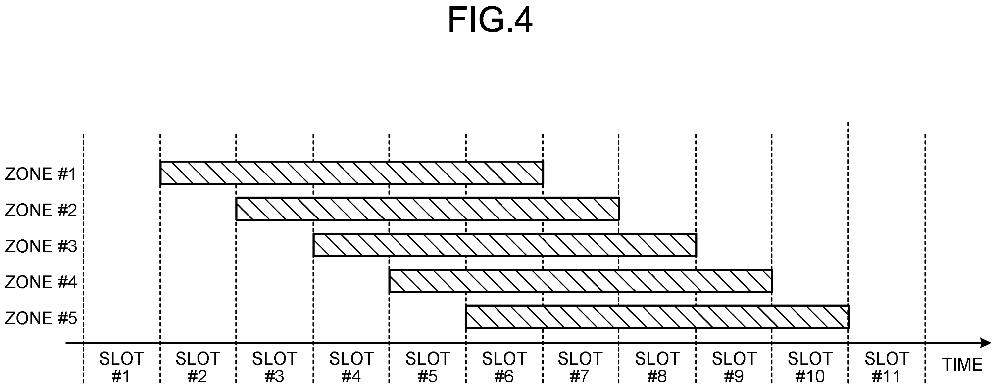

For example, as illustrated in FIG. 4, if the group for groupcast of the transmission device 100 includes zones #1 to #5, the zones #1 to #5 have mutually different active intervals as illustrated with the slanted lines in the drawing. That is, the terminal device located in the zone #1 has an active interval composed of slots #2 to #6, the terminal device located in the zone #2 has an active interval composed of slots #3 to #7, the terminal device located in the zone #3 has an active interval composed of slots #4 to #8, the terminal device located in the zone #4 has an active interval composed of slots #5 to #9, and the terminal device located in the zone #5 has an active interval composed of slots #6 to #10. The length of these active intervals is determined by calculating the number of the slots composing the active intervals from relationships between the size of the communication range and the size of the zones.

In the example illustrated in FIG. 4, the slot selection unit 115 selects the slot #6 at which all the terminal devices located in the zones #1 to #5 are commonly in active intervals and notifies the transmission control unit 116 of the selection.

Note that, if groupcast is executed in accordance with the group ID, the slot selection unit 115 selects a slot at which the terminal devices belonging to the destination group are in active intervals. That is, if groupcast is executed in accordance with the group ID, the active intervals are set per group, and thus the slot selection unit 115 selects a slot in the active intervals corresponding to the destination group and notifies the transmission control unit 116 of the selection.

The transmission control unit 116 encodes and modulates the control information and the transmission data, maps the control information and the transmission data onto a wireless resource, and generates a transmission signal. That is, the transmission control unit 116 maps the control information onto a control channel, maps the transmission data onto a data channel, and generates a transmission signal. At this time, the transmission control unit 116 maps the transmission data and the control information onto the slot notified by the slot selection unit 115.

The memory 120 includes, for example, a random access memory (RAM), a read only memory (ROM), or the like, and stores therein information used for processing at the processor 110.

The wireless communication unit 130 transmits a signal to the other terminal devices. In specific, the wireless communication unit 130 performs predetermined wireless transmission processing on the transmission signal to be wirelessly transmitted via an antenna. This transmission signal is a signal to be groupcast to the terminal devices belonging to the destination group.

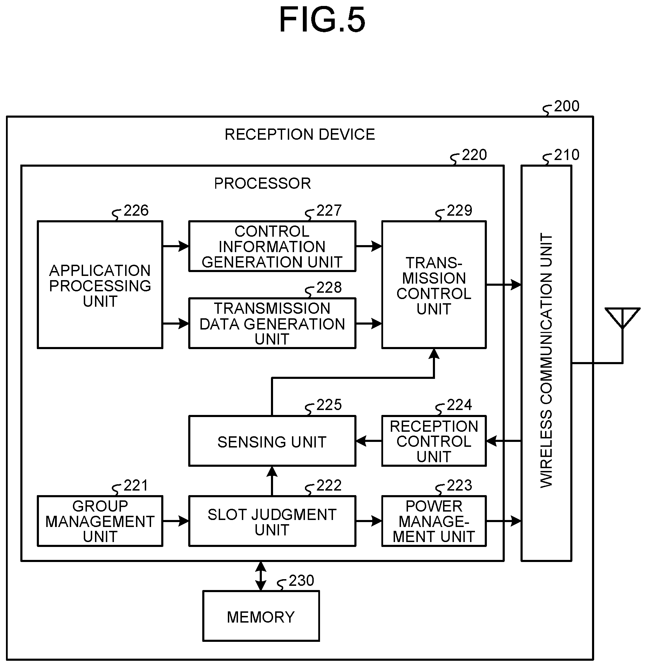

FIG. 5 is a block diagram illustrating a configuration of a reception device 200 according to the one embodiment. The reception device 200 illustrated in FIG. 5 is one of terminal devices receiving groupcast signals. However, the terminal device of the wireless communication system may have both functions of the transmission device 100 illustrated in FIG. 3 and the reception device 200 illustrated in FIG. 5. The function of each processing section when groupcast is executed in accordance with the communication range will be mainly described below.

The reception device 200 illustrated in FIG. 5 includes a wireless communication unit 210, a processor 220, and a memory 230.

The wireless communication unit 210 transmits and receives signals to and from the other terminal devices. In specific, the wireless communication unit 210 wirelessly receives a signal via an antenna and performs predetermined wireless reception processing on the reception signal. The wireless communication unit 210 also performs predetermined wireless transmission processing on a transmission signal to be wirelessly transmitted to the other terminal devices via the antenna. The wireless communication unit 210 operates only during the active interval of the reception device 200 and saves power not to consume power during time other than the active interval, which will be described later.

The processor 220 includes, for example, a CPU, a FPGA, a DSP, or the like, and controls the entire reception device 200 in a centralized manner. In specific, the processor 220 includes a group management unit 221, a slot judgment unit 222, a power management unit 223, a reception control unit 224, a sensing unit 225, an application processing unit 226, a control information generation unit 227, a transmission data generation unit 228, and a transmission control unit 229.

The group management unit 221 manages the group to which the reception device 200 belongs. In specific, the group management unit 221 uses, for example, GPS or the like to acquire position information of the reception device 200 and identifies the coordinates where the reception device 200 is located. The group management unit 221 then acquires the zone ID of the zone where the signal source is located from the reception signal and judges whether the reception device 200 belongs to the group. That is, the distance between the zone of the signal source and the coordinates where the reception device 200 is located is calculated, and if the calculated distance is equal to or less than the size of the communication range, it is judged that the reception device 200 belongs to the group. The group management unit 221 also identifies the zone ID of the zone where the reception device 200 is located from the coordinates of the reception device 200.

Note that, if groupcast is executed in accordance with the group ID, the group management unit 221 holds the group ID of the group to which the reception device 200 belongs and holds identification information of the other terminal devices belonging to this group.

The slot judgment unit 222 acquires the zone ID of the zone where the reception device 200 is located from the group management unit 221 and judges slots composing the active interval of the reception device 200. That is, the slot judgment unit 222 makes judgment on each slot corresponding to the zone and determines the active interval of the reception device 200 composed of a plurality of consecutive slots. In specific, the slot judgment unit 222 judges a slot included in the active interval by a judgment function S(n) of the following expression (1) indicating whether a slot #n is included in the active interval. $S \left(n\right) = \left\{\begin{matrix}1 & if Z \left(\left(n+Δt\right)modN\right) = 1 \\ 0 & otherwise\end{matrix}\right.$ (1)

If the judgment function S(n) of the above expression (1) equals 1, the slot #n is included in the active interval, and if the judgment function S(n) equals 0, the slot #n is not included in the active interval. In the above expression (1), Δt is a predetermined offset being an integer, and N is the number of slots in a predetermined DRX cycle. Furthermore, amodA indicates the remainder left when a is divided by A. Moreover, Z(m) is a function of the following expression (2). $Z \left(m\right) = \left\{\begin{matrix}1 & if i - Y \leq m \leq i + Y \\ 0 & otherwise\end{matrix}\right.$ (2)

In the above expression (2), i is the zone ID of a zone #i where the reception device 200 is located, and Y is a constant determined from the sizes of the communication range and the zone. In specific, Y is an integer satisfying the condition of the following expression (3). $Y \geq \frac{{d}_{cr}}{L}$ (3)

In the above expression (3), d_{cr} indicates the size of the communication range, and L indicates the size of the zone. Here, assume that the zone is a square with each side L.

The above expressions (2) and (3) indicate that, if the constant Y is the smallest integer satisfying the above expression (3), for example, the function Z(m) outputs 1 when a zone #m is in the communication range of the reception device 200, and outputs 0 when the zone #m is outside the communication range of the reception device 200. That is, the function Z(m) is a function indicating the relationship of a zone and outputting 1 indicating that at least a zone in the communication range of the zone where the reception device 200 is located has a relationship.

Furthermore, the above expression (1) indicates that it is judged that a slot corresponding to the zone having a relationship is included in the active interval. Thus, the slot judgment unit 222 judges slots corresponding to the zone where the reception device 200 is located and the zone having a relationship with this zone, to be in the active interval of the reception device 200. The length (the number of slots) l_{act} of the active interval determined by this judgment is expressed by the following expression (4) . ${l}_{act} = 2 Y + 1$ (4)

With the active interval having such a length, at least the zone in the communication range of the zone where the reception device 200 is located has a slot that is simultaneously in the active intervals. Thus, by similarly determining the active interval at each of the terminal devices including the reception device 200, a slot is simultaneously in the active intervals of all the terminal devices located in the communication range of the signal source, and a signal can be transmitted at a timing capable of reception at each terminal device in the communication range. Note that all the parameters relating to the above expressions (1) to (4) may be preliminarily set in the wireless communication system or may be semi-statically set again.

The power management unit 223 controls power supply to the wireless communication unit 210, and turns on and saves power of the wireless communication unit 210. In specific, the power management unit 223 supplies power to turn on the wireless communication unit 210 during the active interval judged by the slot judgment unit 222. On the other hand, the power management unit 223 stops power supply to save power of the wireless communication unit 210 during time other than the active interval.

The reception control unit 224 acquires the reception signal from the wireless communication unit 210 and executes reception processing on the reception signal. In specific, the reception control unit 224 executes demodulation and decoding of a control channel to acquire the control information and notifies the group management unit 221 of the zone ID of the zone where the signal source is located. The reception control unit 224 also executes demodulation and decoding of a data channel in accordance with the control information.

The sensing unit 225 executes sensing judging whether a wireless resource is used by another terminal device. In specific, when the active interval judged by the slot judgment unit 222 arrives, the sensing unit 225 judges whether another terminal device transmits a signal in each slot of the active interval in a predetermined sensing window.

The application processing unit 226 executes processing of an application supporting various communication services.

The control information generation unit 227 generates control information, such as SCI. The control information generated by the control information generation unit 227 includes the zone ID of the zone where the reception device 200 is located. The control information may further include information on the encoding rate and modulation scheme of data, information identifying a wireless resource for a data channel used for data transmission, information identifying a wireless resource used for data retransmission, and the like.

The transmission data generation unit 228 generates transmission data to be groupcast to the terminal devices in the group in accordance with the processing at the application processing unit 226. The transmission data generated by the transmission data generation unit 228 is groupcast to the terminal devices in the group set in accordance with the communication range, for example.

The transmission control unit 229 encodes and modulates the control information and the transmission data, maps the control information and the transmission data onto a wireless resource, and generates a transmission signal. That is, the transmission control unit 229 maps the control information onto a control channel, maps the transmission data onto a data channel, and generates a transmission signal. At this time, the transmission control unit 229 selects a wireless resource to be used for signal transmission on the basis of a result of the sensing at the sensing unit 225. In specific, the transmission control unit 229 selects, from a selection window, a wireless resource that is assumed not to be used by another terminal device as a result of the sensing and that is included in the active interval of the terminal device being the data destination. Note that the selection window is a resource pool having a predetermined time width and set at a timing after the sensing window.

The memory 230 includes, for example, a RAM, a ROM, or the like, and stores therein information used for processing at the processor 220.

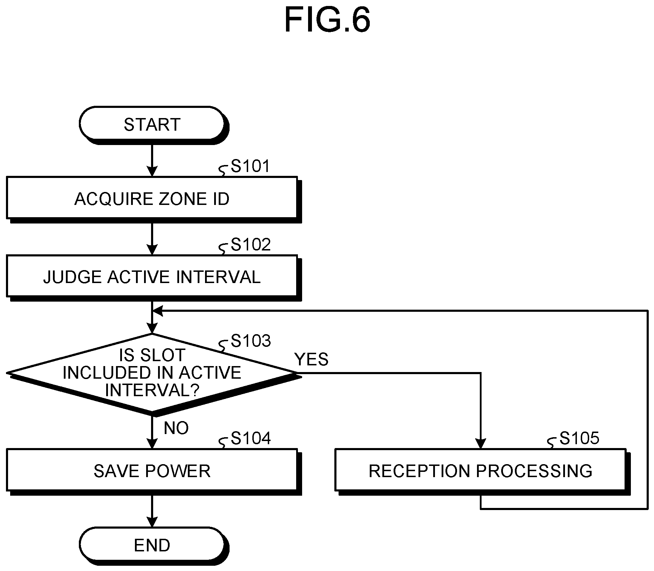

Next, a power control method in the reception device 200 having the above configuration will be described with reference to the flowchart illustrated in FIG. 6.

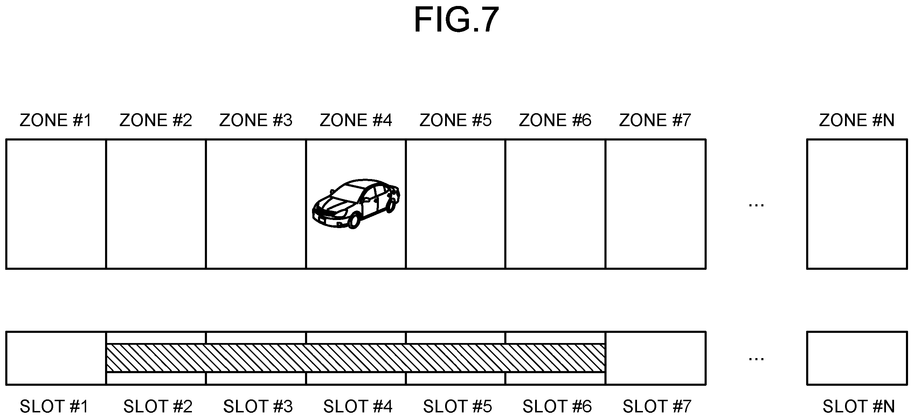

First, the position information of the reception device 200 is acquired using, for example, GPS, and thus the group management unit 221 acquires the coordinates where the reception device 200 is located and identifies the zone ID from the coordinates (step S101). Then, the slot judgment unit 222 uses the above expressions (1) to (3) to judge the active interval of the reception device 200 (step S102). That is, slots corresponding to the zone where the reception device 200 is located and zones having relationships with this zone are judged to be in the active interval of the reception device 200. In specific, for example, as illustrated in FIG. 7, if the reception device 200 is located in a zone #4, for example, zones #2 to #6 centered on the zone #4 are judged to be zones having relationships. Then, slots #2 to #6 corresponding to the zones #2 to #6 are judged to be in the active interval of the reception device 200.

Then, the power management unit 223 judges whether the current slot is included in the active interval (step S103), and if the current slot is not included in the active interval (No at step S103), power supply to the wireless communication unit 210 is stopped to save power (step S104).

On the other hand, if the current slot is included in the active interval (Yes at step S103), power is supplied to the wireless communication unit 210 to turn on the wireless communication unit 210. Then, the reception control unit 224 executes the reception processing on the reception signal received by the wireless communication unit 210 (step S105). Furthermore, in the predetermined sensing window, the sensing unit 225 executes the sensing judging whether another terminal device transmits a signal in the current slot.

In this way, the active interval is set in correspondence with the zone where the reception device 200 is located, and thus power of the wireless communication unit 210 can be saved during time other than the active interval, resulting in a reduction in power consumption. Furthermore, during the active interval, signals can be transmitted and received, and sensing checking the availability of wireless resources can be executed.

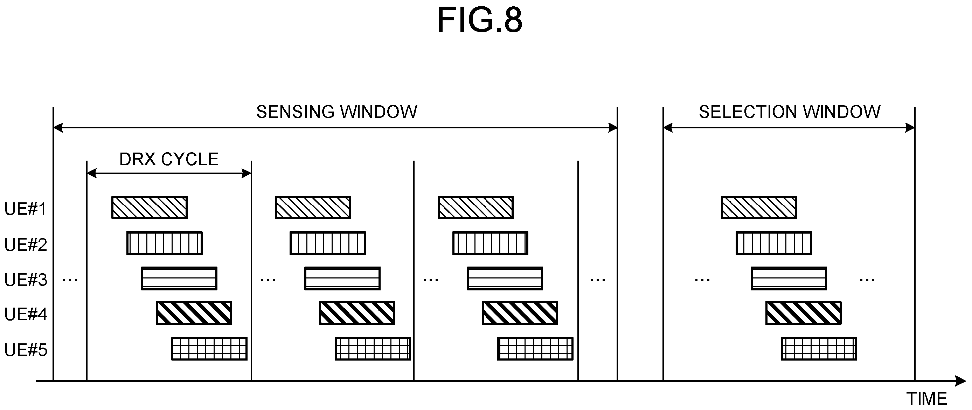

Next, specific examples of the active intervals of a plurality of terminal devices belonging to the same group will be described. FIG. 8 is a diagram illustrating a specific example of the active intervals of a plurality of terminal devices UE#1 to #5. The terminal devices UE#1 to #5 belong to the same group in accordance with the communication range. Furthermore, the terminal devices UE#1 to #5 are located in mutually different zones.

As illustrated in FIG. 8, the window width of the sensing window is a width including a plurality of DRX cycles. Each DRX cycle includes one active interval corresponding to each zone in the group. The terminal devices UE#1 to #5 each identify slots corresponding to the zone where the own device is located and zones having relationships with the zone and set an active interval. This enables the terminal devices UE#1 to #5 located in mutually different zones to set active intervals at mutually different timings that include a slot at which the wireless communication units are commonly turned on, in each DRX cycle. Then, the terminal devices UE#1 to #5 execute the sensing during the respective active intervals. Thus, the terminal devices UE#1 to #5 can check the availability of wireless resources at mutually different timings.

When the selection window arrives at a timing after the sensing window, the terminal devices UE#1 to #5 select wireless resources used for signal transmission on the basis of results of the sensing. In specific, the terminal devices UE#1 to #5 each select, from wireless resources corresponding to the active interval, a wireless resource assumed not to be used by the other terminal devices from the sensing result. The terminal devices UE#1 to #5 have active intervals at mutually different timings and thus have mutually different wireless resources as candidates for the selection, and the possibility of occurrence of a conflict of selected wireless resources can be reduced.

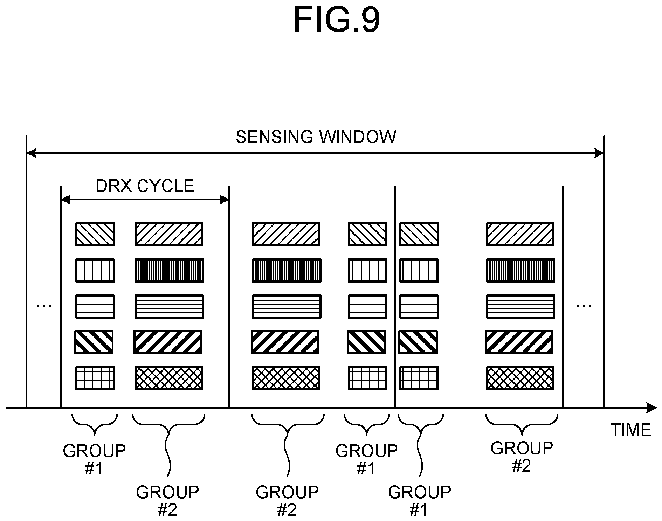

On the other hand, FIG. 9 is a diagram illustrating a specific example of the active intervals when groupcast is performed in accordance with the group ID.

As illustrated in FIG. 9, the window width of the sensing window is a width including a plurality of DRX cycles. Each DRX cycle includes one active interval of each group. That is, the active intervals of groups #1 and #2 are included in each DRX cycle.

In the example illustrated in FIG. 9, the active intervals of each group are at the same timing. Thus, when groupcast is performed, a signal may be transmitted during the active intervals of the destination group. That is, when groupcast is performed to the terminal devices in the group #1, for example, a signal may be transmitted during the active intervals of the group #1.

Each group has the active intervals at the same timing in each DRX cycle; however, each group has the active intervals at different timings in different DRX cycles. That is, for example, the group #1 has the active intervals at mutually different timings in three DRX cycles illustrated in FIG. 9. This is achieved by, for example, regarding a slot corresponding to a value in which an offset preliminarily determined for each DRX cycle is provided to the group ID of each group, as the active interval in the DRX cycle.

In this way, by setting the active intervals of each group at different timings in DRX cycles, more wireless resources are available for the active intervals of each group in the selection window. As a result, wireless resources to be candidates for the selection increase, and the possibility of occurrence of a conflict of wireless resources selected for each group can be reduced.

As described above, according to this embodiment, the reception device sets an active interval in accordance with the zone and the communication range or in accordance with the group ID, executes the reception processing including the sensing during the active interval, and saves power during an interval other than the active interval. Furthermore, the transmission device groupcasts a signal at a timing when the destination terminal devices are commonly in active intervals. Thus, the destination terminal devices can receive the signal groupcast by the transmission device, and the possibility of a conflict when the reception devices select wireless resources from sensing results can be reduced. In other words, while power consumption is reduced, a decrease in communication performance can be restrained.

### (Other Embodiments)

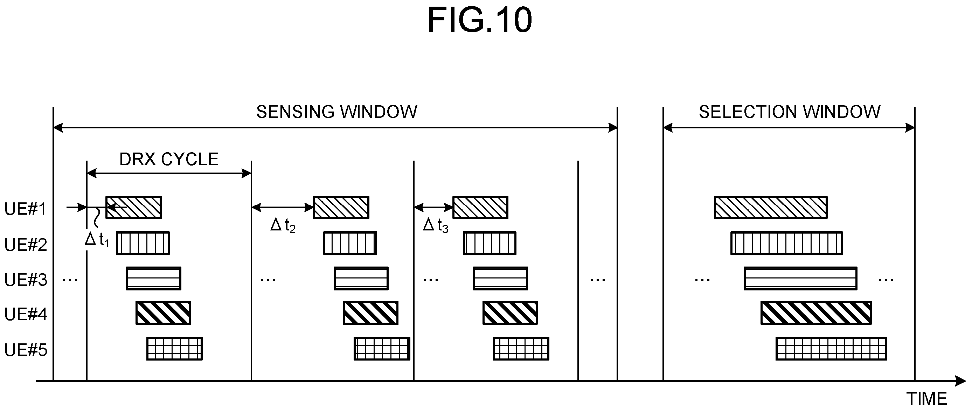

In the above-described one embodiment, when groupcast is performed in accordance with the communication range, the active intervals are set as illustrated in FIG. 8, for example; however, the active interval provided with an offset in each DRX cycle may be set. That is, for example, as illustrated in FIG. 10, offsets Δt₁ to Δt₃ mutually different in three DRX cycles may be provided to the active intervals of each of the terminal devices UE#1 to #5.

In this way, by providing the offset for each DRX cycle to the active interval, the active intervals are set at various timings in DRX cycles, so that more wireless resources are available for the active intervals of each terminal device in the selection window. As a result, wireless resources to be candidates for the selection increase, and the possibility of occurrence of a conflict of wireless resources selected from the selection window by the terminal devices can be reduced.

Furthermore, in the above-described one embodiment, groupcast in accordance with the communication range and groupcast in accordance with the group ID have been described; however, one terminal device may belong to both groupcast groups. In this case, the active interval is set in accordance with each type of groupcast.

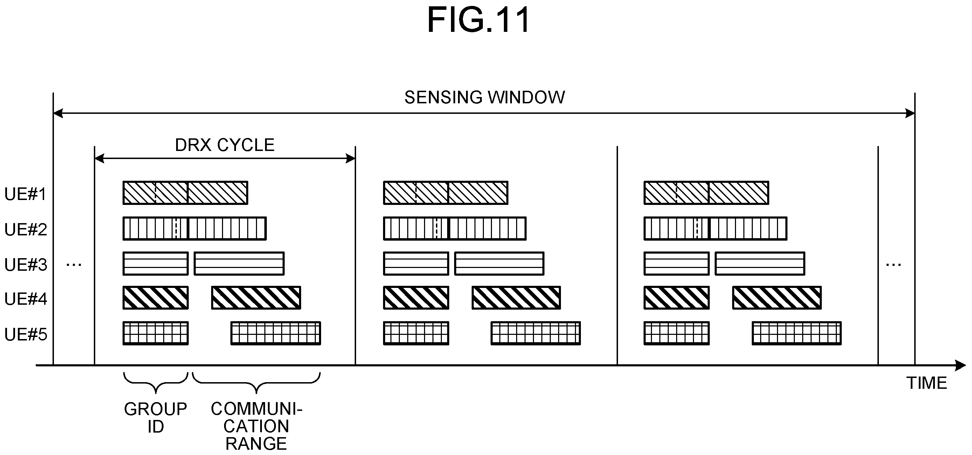

In specific, for example, as illustrated in FIG. 11, when the terminal devices UE#1 to #5 belong to both groupcast groups of groupcast in accordance with the communication range and groupcast in accordance with the group ID, the active intervals are set for each type. That is, the active intervals are set in accordance with the group ID of the group to which the terminal devices UE#1 to #5 belong, and the active intervals are set in accordance with the zones where the terminal devices UE#1 to #5 are located and the communication range. During each active interval, each of the terminal devices UE#1 to #5 turns on the wireless communication unit and executes the reception processing including the sensing.

### [Explanation of Reference]

110, 220 PROCESSOR
111, 226 APPLICATION PROCESSING UNIT
112, 227 CONTROL INFORMATION GENERATION UNIT
113, 228 TRANSMISSION DATA GENERATION UNIT
114, 221 GROUP MANAGEMENT UNIT
115 SLOT SELECTION UNIT
116, 229 TRANSMISSION CONTROL UNIT
120, 230 MEMORY
130, 210 WIRELESS COMMUNICATION UNIT
222 SLOT JUDGMENT UNIT
223 POWER MANAGEMENT UNIT
224 RECEPTION CONTROL UNIT
225 SENSING UNIT

## Claims

1. A wireless communication device (200) comprising:
a wireless communication unit (210) configured to receive a signal that is groupcasted via a sidelink channel and to transmit a second signal; and
a controlling unit (220) configured to determine parameters relating an offset of an active interval during which signals can be received in DRX which is used for sidelink communication in accordance with identification information of a group, wherein
the controlling unit (220) is configured to judge whether a wireless resource is used by another device during the active interval corresponding to the parameters, and to select, from wireless resources corresponding to the active interval, the judged wireless resource assumed not to be used by other terminal devices.

2. The wireless communication device (200) according to claim 1, wherein
the controlling unit (220) is configured to supply power to the wireless communication unit (210) during the active interval corresponding to the offset.

3. The wireless communication device (200) according to any one of claims 1 to 2, wherein, when groupcast is performed in a group set in accordance with a communication range corresponding to a communication service, the controlling unit (220) is configured to determine an active interval corresponding to a zone where an own device is located and the communication range.

4. The wireless communication device (200) according to claim 3, wherein the controlling unit (220) is configured to determine an active interval composed of a plurality of consecutive slots each corresponding to a zone.

5. The wireless communication device (200) according to claim 4, wherein the controlling unit (220) is configured to determine an active interval including a slot corresponding to a zone where an own device is located and a zone in the communication range of the own device.

6. The wireless communication device (200) according to claim 1, wherein the controlling unit (220) is configured to determine the parameters relating to an offset of an active interval in accordance with the identification information of the group to which an own device belongs.

7. The wireless communication device (200) according to claim 1, wherein the controlling unit (220) is configured to determine an active interval in each of a plurality of discontinuous reception cycles, the active intervals being provided with offsets mutually different in the discontinuous reception cycles.

8. A wireless communication device (100) comprising:
a wireless communication unit (130) configured to:
manage a group of terminal devices, the group being a destination of a signal to be groupcast via a sidelink channel,
determine for each of a plurality of DRX cycles an offset of an active interval during which signals can be received and transmitted by the terminal devices of the group, wherein each of the plurality of DRX cycles is used for sidelink communication in accordance with identification information of a group, the active intervals being provided with offsets mutually different in the DRX cycles,
determine a transmission timing according to one of the determined offsets, and
transmit the signal to be groupcast via the sidelink channel according to the determined transmission timing.

9. A wireless communication system comprising:
a first terminal device (100); and
a second terminal device (200) according to claim 1.

## Patentansprüche

1. Drahtlose Kommunikationsvorrichtung (200), umfassend:
eine drahtlose Kommunikationseinheit (210), die dazu konfiguriert ist, ein Signal zu empfangen, das über einen Sidelink-Kanal als Groupcast gesendet wird, und ein zweites Signal zu übertragen; und
eine Steuereinheit (220), die dazu konfiguriert ist, Parameter, die einen Offset eines aktiven Intervalls betreffen, während dessen Signale in DRX empfangen werden können, das für Sidelink-Kommunikation in Übereinstimmung mit Identifikationsinformationen einer Gruppe verwendet wird, zu bestimmen, wobei
die Steuereinheit (220) dazu konfiguriert ist, zu beurteilen, ob eine drahtlose Ressource durch eine andere Vorrichtung während des den Parametern entsprechenden aktiven Intervalls verwendet wird, und aus drahtlosen Ressourcen, die dem aktiven Intervall entsprechen, die beurteilte drahtlose Ressource auszuwählen, von der angenommen wird, dass sie nicht durch andere Endgerätevorrichtungen verwendet wird.

2. Drahtlose Kommunikationsvorrichtung (200) nach Anspruch 1, wobei
die Steuereinheit (220) dazu konfiguriert ist, der drahtlosen Kommunikationseinheit (210) während des dem Offset entsprechenden aktiven Intervalls Strom zuzuführen.

3. Drahtlose Kommunikationsvorrichtung (200) nach einem der Ansprüche 1 bis 2, wobei, wenn Groupcast in einer Gruppe durchgeführt wird, die in Übereinstimmung mit einer Kommunikationsreichweite festgelegt ist, die einem Kommunikationsdienst entspricht, die Steuereinheit (220) dazu konfiguriert ist, ein aktives Intervall zu bestimmen, das einer Zone, in der sich eine eigene Vorrichtung befindet, und der Kommunikationsreichweite entspricht.

4. Drahtlose Kommunikationsvorrichtung (200) nach Anspruch 3, wobei die Steuereinheit (220) dazu konfiguriert ist, ein aktives Intervall zu bestimmen, das aus einer Vielzahl von aufeinanderfolgenden Slots zusammengesetzt ist, die jeweils einer Zone entsprechen.

5. Drahtlose Kommunikationsvorrichtung (200) nach Anspruch 4, wobei die Steuereinheit (220) dazu konfiguriert ist, ein aktives Intervall zu bestimmen, das einen Slot einschließt, der einer Zone, in der sich eine eigene Vorrichtung befindet, und einer Zone in der Kommunikationsreichweite der eigenen Vorrichtung entspricht.

6. Drahtlose Kommunikationsvorrichtung (200) nach Anspruch 1, wobei die Steuereinheit (220) dazu konfiguriert ist, die Parameter, die einen Offset eines aktiven Intervalls betreffen, in Übereinstimmung mit den Identifikationsinformationen der Gruppe zu bestimmen, zu der eine eigene Vorrichtung gehört.

7. Drahtlose Kommunikationsvorrichtung (200) nach Anspruch 1, wobei die Steuereinheit (220) dazu konfiguriert ist, ein aktives Intervall in jedem einer Vielzahl von diskontinuierlichen Empfangszyklen zu bestimmen, wobei die aktiven Intervalle mit Offsets versehen sind, die in den diskontinuierlichen Empfangszyklen voneinander verschieden sind.

8. Drahtlose Kommunikationsvorrichtung (100), umfassend:
eine drahtlose Kommunikationseinheit (130), die dazu konfiguriert ist:
eine Gruppe von Endgerätevorrichtungen zu verwalten, wobei die Gruppe ein Ziel eines Signals ist, das über einen Sidelink-Kanal als Groupcast gesendet werden soll,
für jeden einer Vielzahl von DRX-Zyklen einen Offset eines aktiven Intervalls zu bestimmen, während dessen Signale durch die Endgerätevorrichtungen der Gruppe empfangen und übertragen werden können, wobei jeder der Vielzahl von DRX-Zyklen für Sidelink-Kommunikation in Übereinstimmung mit Identifikationsinformationen einer Gruppe verwendet wird, wobei die aktiven Intervalle mit Offsets versehen sind, die in den DRX-Zyklen voneinander verschieden sind,
ein Übertragungstiming gemäß einem der bestimmten Offsets zu bestimmen, und
das als Groupcast zu sendende Signal über den Sidelink-Kanal gemäß dem bestimmten Übertragungstiming zu übertragen.

9. Drahtloses Kommunikationssystem, umfassend:
eine erste Endgerätevorrichtung (100); und
eine zweite Endgerätevorrichtung (200) nach Anspruch 1.

## Revendications

1. Système de communication sans fil (200) comprenant :
une unité de communication sans fil (210) configurée pour recevoir un signal qui est diffusé en groupe via un canal de liaison latérale et pour transmettre un second signal ; et
une unité de commande (220) configurée pour déterminer des paramètres relatifs à un décalage d'un intervalle actif pendant lequel des signaux peuvent être reçus en DRX, qui est utilisée pour la communication de liaison latérale en fonction des informations d'identification d'un groupe, dans lequel
l'unité de commande (220) est configurée pour déterminer si une ressource sans fil est utilisée par un autre dispositif pendant l'intervalle actif correspondant aux paramètres, et pour sélectionner, parmi les ressources sans fil correspondant à l'intervalle actif, la ressource sans fil déterminée comme non utilisée par d'autres dispositifs terminaux.

2. Dispositif de communication sans fil (200) selon la revendication 1, dans lequel
l'unité de commande (220) est configurée pour alimenter l'unité de communication sans fil (210) pendant l'intervalle actif correspondant au décalage.

3. Dispositif de communication sans fil (200) selon l'une quelconque des revendications 1 et 2, dans lequel, lorsque la diffusion en groupe est effectuée dans un groupe défini en fonction d'une portée de communication correspondant à un service de communication, l'unité de commande (220) est configurée pour déterminer un intervalle actif correspondant à une zone où se trouve un dispositif propre et à la portée de communication.

4. Dispositif de communication sans fil (200) selon la revendication 3, dans lequel l'unité de commande (220) est configurée pour déterminer un intervalle actif composé d'une pluralité de créneaux consécutifs correspondant chacun à une zone.

5. Dispositif de communication sans fil (200) selon la revendication 4, dans lequel l'unité de commande (220) est configurée pour déterminer un intervalle actif comportant un créneau correspondant à une zone où se trouve un dispositif propre et une zone dans la portée de communication du dispositif propre.

6. Dispositif de communication sans fil (200) selon la revendication 1, dans lequel l'unité de commande (220) est configurée pour déterminer les paramètres relatifs à un décalage d'un intervalle actif en fonction des informations d'identification du groupe auquel appartient un dispositif propre.

7. Dispositif de communication sans fil (200) selon la revendication 1, dans lequel l'unité de commande (220) est configurée pour déterminer un intervalle actif dans chacun d'une pluralité de cycles de réception discontinus, les intervalles actifs étant dotés de décalages mutuellement différents dans les cycles de réception discontinus.

8. Dispositif de communication sans fil (100) comprenant :
une unité de communication sans fil (130) configurée pour :
gérer un groupe de dispositifs terminaux, le groupe étant une destination d'un signal à diffuser en groupe via un canal de liaison latérale,
déterminer pour chacun d'une pluralité de cycles DRX un décalage d'un intervalle actif pendant lequel des signaux peuvent être reçus et transmis par les dispositifs terminaux du groupe, dans lequel chacun de la pluralité de cycles DRX est utilisé pour la communication de liaison latérale en fonction des informations d'identification d'un groupe, les intervalles actifs étant dotés de décalages mutuellement différents dans les cycles DRX,
déterminer une synchronisation de transmission en fonction de l'un des décalages déterminés, et
transmettre le signal à diffuser en groupe via le canal de liaison latérale en fonction de la synchronisation de transmission déterminée.

9. Système de communication sans fil comprenant :
un premier dispositif terminal (100) ; et
un second dispositif terminal (200) selon la revendication 1.
